# EUROPEAN PATENT APPLICATION

(11) **EP 4 654 557 A1**
(43) Date of publication of application: **26.11.2025**
(21) Application number: 23920861.4
(22) Date of filing: 05.12.2023
(51) Int. Cl.: H04L 67/101

(54) **CLOUD TECHNOLOGY-BASED DATA TRANSMISSION METHOD, CLOUD COMPUTING SYSTEM AND CLOUD MANAGEMENT PLATFORM**

(30) Priority: 11.02.2023 CN 202310100935; 20.03.2023 CN 202310279628
(71) Applicant: Huawei Cloud Computing Technologies Co., Ltd., Guiyang, Guizhou 550025 (CN)
(72) Inventor: DING, Jingwen, Shenzhen, Guangdong 518129 (CN)
(74) Representative: Epping - Hermann - Fischer
(86) International application number: PCT/CN2023/136298
(87) International publication number: WO 2024/164672

(57) **Abstract**

This application provides a cloud technology-based data transmission method, a cloud computing system, and a cloud management platform. The method includes: A service end establishes a data transmission connection to a client, where the data transmission connection is used by the client to send a data stream to the service end. The cloud management platform provides an expected bandwidth creation interface, where the expected bandwidth creation interface is configured to receive an expected bandwidth that is entered by a tenant for the data transmission connection. When the expected bandwidth is less than an actual bandwidth for data stream transmission between the client and the service end, the client adds a data stream to be sent to the service end. Alternatively, when the expected bandwidth is greater than the actual bandwidth for data stream transmission between the client and the service end, the client removes a data stream to be sent to the service end. The client in this application monitors a size of an actual bandwidth of the data stream to be sent to the service end, and dynamically adjusts a quantity of to-be-sent data streams, so that the actual bandwidth meets an expected bandwidth requirement, and data transmission between the client and the service end is more stable.

## Description

### TECHNICAL FIELD

This application relates to the field of cloud technologies, and in particular, to a cloud technology-based data transmission method, a cloud computing system, and a cloud management platform.

### BACKGROUND

With wide application of cloud technologies, more enterprise tenants deploy their services on a cloud. During running of the services of the enterprise tenants on the cloud, data stored by the tenants on the cloud flows between clients and service ends. When the client is deployed at a location different from that of the service end, the client is constantly moving, or the client is in a weak network environment, stability of data transmission between the client and the service end is affected.

### SUMMARY

This application provides a cloud technology-based data transmission method, a cloud computing system, and a cloud management platform. A client monitors a size of an actual bandwidth of a data stream to be sent to a service end, and dynamically adjusts a quantity of to-be-sent data streams, so that the actual bandwidth meets an expected bandwidth requirement, and data transmission between the client and the service end is more stable.

According to a first aspect, this application provides a cloud technology-based data transmission method, applied to a cloud computing system. The cloud computing system includes a client, a service end, and a cloud management platform. The method includes: The service end establishes a data transmission connection to the client, where the data transmission connection is used by the client to send a data stream to the service end. The cloud management platform provides an expected bandwidth creation interface, where the expected bandwidth creation interface is configured to receive an expected bandwidth that is entered by a tenant for the data transmission connection. When the expected bandwidth is less than an actual bandwidth for data stream transmission between the client and the service end, the client adds a data stream to be sent to the service end. Alternatively, when the expected bandwidth is greater than the actual bandwidth for data stream transmission between the client and the service end, the client removes a data stream to be sent to the service end.

Based on the foregoing method, in a process in which the client sends a data stream to the service end, the client monitors a size of an actual bandwidth of the data stream to be sent to the service end, and dynamically adjusts a quantity of to-be-sent data streams, so that the actual bandwidth meets an expected bandwidth requirement, and data transmission between the client and the service end is more stable.

In a possible implementation of the first aspect, the cloud management platform provides a transmission policy creation interface, where the transmission policy creation interface is configured to receive a transmission policy entered by the tenant, and the transmission policy indicates data stream transmission protocol content to be sent by the client to the service end. When determining that the service end supports the transmission policy, the cloud management platform instructs the service end to establish the data transmission connection to the client.

Based on the foregoing method, before the service end establishes the data transmission connection to the client, the tenant needs to enter the transmission policy on the cloud management platform. The transmission policy is used to determine whether the service end and the client meet a same data stream transmission protocol, to ensure matching of data stream transmission between the service end and the client.

In a possible implementation of the first aspect, the client sends a transmission policy for establishing a data transmission connection to the service end, where the transmission policy indicates data transmission protocol content between the client and the service end; and the service end establishes the data transmission connection to the client when determining that the transmission policy is supported.

Based on the foregoing method, before the service end establishes the data transmission connection to the client, the client sends the transmission policy to the service end. The transmission policy is used to determine whether the service end and the client meet a same data stream transmission protocol, to ensure matching of data stream transmission between the service end and the client.

In a possible implementation of the first aspect, that the client adds a data stream to be sent to the service end includes: The client increases a quantity of data streams to be sent in parallel to the service end.

Based on the foregoing method, the operation of adding, by the client, the data stream to be sent to the service end is specifically implemented by increasing the quantity of data streams to be sent in parallel. Sending the data streams in parallel can increase an actual bandwidth for sending the data streams, so that the actual bandwidth reaches a value of the expected bandwidth, and data transmission between the client and the service end meets an expected requirement. In a possible implementation of the first aspect, that the client removes the data stream to be sent to the service end includes: The client decreases a quantity of data streams to be sent in parallel to the service end.

Based on the foregoing method, the operation of removing, by the client, the data stream to be sent to the service end is specifically implemented by decreasing the quantity of data streams to be sent in parallel. Sending the data streams in parallel can reduce an actual bandwidth for sending the data streams, so that the actual bandwidth reaches a value of the expected bandwidth. In addition, an excess bandwidth can be further used for data stream transmission between another client and the service end, so that an overall bandwidth usage of the system is improved.

In a possible implementation of the first aspect, the client obtains an average data stream bandwidth for the data transmission connection; and the client determines the quantity of data streams, where the quantity of data streams is obtained by rounding up a ratio of the expected bandwidth to the average data stream bandwidth.

Based on the foregoing method, the client obtains the quantity of data streams by rounding up the ratio of the expected bandwidth to the average data stream bandwidth. This calculation method can make the actual bandwidth be closer to the value of the expected bandwidth.

In a possible implementation of the first aspect, the client splits first data based on a size of a data block to obtain a plurality of first data blocks. The client fills the plurality of first data blocks into a plurality of first data streams, and sends the plurality of first data streams to the service end. The service end receives the plurality of first data streams, and parses the plurality of first data streams to obtain the plurality of first data blocks. The service end writes the plurality of first data blocks into a data persistence layer.

Based on the foregoing method, before sending data streams to the service end, the client splits data into data blocks and then fills the data blocks into the data streams. After receiving the data streams, the service end obtains the data blocks through parsing and writes the data blocks into the data persistence layer. This data stream transmission manner makes a data stream transmission process more efficient and has a lower error rate.

In a possible implementation of the first aspect, that the service end parses the plurality of first data streams to obtain the plurality of first data blocks includes: The service end extracts data transmission identities carried in the plurality of first data streams. The service end parses a plurality of first data streams that carry a same data transmission identity to obtain location information of a plurality of data record blocks. The service end assembles the plurality of first data blocks based on the location information of the plurality of data record blocks.

Based on the foregoing method, a data stream to be sent by the client to the service end carries a data transmission identity, to prevent the service end from parsing an irrelevant data stream. In addition, the data stream further includes location information of a data record block, so that the service end reassembles the first data block. This improves accuracy of data stream transmission between the client and the service end.

In a possible implementation of the first aspect, the size of the data block is the same as a size of a node at the data persistence layer.

The service end may write, into the data persistence layer, data blocks obtained from the data stream through parsing, thereby improving efficiency of data stream transmission between the client and the service end.

According to a second aspect, this application further provides a cloud technology-based data transmission method, where the method is applied to a cloud management platform, the cloud management platform is configured to manage an infrastructure that provides a cloud computing service, the infrastructure includes at least one service end, and the method includes: The cloud management platform provides an expected bandwidth creation interface, where the expected bandwidth creation interface is configured to receive an expected bandwidth entered by a tenant, and the expected bandwidth is used to: when the expected bandwidth is less than an actual bandwidth for data stream transmission between a client and the service end, instruct the client to add a data stream to be sent to the service end; or when the expected bandwidth is greater than the actual bandwidth for data stream transmission between the client and the service end, instruct the client to remove a data stream to be sent to the service end.

Based on the foregoing method, in a process in which the client sends a data stream to the service end, the client monitors a size of an actual bandwidth of the data stream to be sent to the service end, and dynamically adjusts a quantity of to-be-sent data streams, so that the actual bandwidth meets an expected bandwidth requirement, and data transmission between the client and the service end is more stable.

In a possible implementation of the second aspect, the cloud management platform provides a transmission policy creation interface, where the transmission policy creation interface is configured to receive a transmission policy entered by the tenant, and the transmission policy indicates data stream transmission protocol content to be sent by the client to the service end; and when determining that the service end supports the transmission policy, the cloud management platform instructs the service end to establish a data transmission connection to the client, where the data transmission connection is used by the client to send a data stream to the service end.

Based on the foregoing method, before the service end establishes the data transmission connection to the client, the tenant needs to enter the transmission policy on the cloud management platform. The transmission policy is used to determine whether the service end and the client meet a same data stream transmission protocol, to ensure matching of data stream transmission between the service end and the client.

In a possible implementation of the second aspect, that the client adds the data stream to be sent to the service end includes: The client increases a quantity of data streams to be sent in parallel to the service end.

Based on the foregoing method, the operation of adding, by the client, the data stream to be sent to the service end is specifically implemented by increasing the quantity of data streams to be sent in parallel. Sending the data streams in parallel can increase an actual bandwidth for sending the data streams, so that the actual bandwidth reaches a value of the expected bandwidth, and data transmission between the client and the service end meets an expected requirement. In a possible implementation of the second aspect, that the client removes the data stream to be sent to the service end includes: The client decreases the quantity of data streams to be sent in parallel to the service end.

Based on the foregoing method, the operation of removing, by the client, the data stream to be sent to the service end is specifically implemented by decreasing the quantity of data streams to be sent in parallel. Sending the data streams in parallel can reduce an actual bandwidth for sending the data streams, so that the actual bandwidth reaches a value of the expected bandwidth. In addition, an excess bandwidth can be further used for data stream transmission between another client and the service end, so that an overall bandwidth usage of the system is improved.

In a possible implementation of the second aspect, the client obtains an average data stream bandwidth for the data transmission connection; and the client determines the quantity of data streams, where the quantity of data streams is obtained by rounding up a ratio of the expected bandwidth to the average data stream bandwidth.

Based on the foregoing method, the client obtains the quantity of data streams by rounding up the ratio of the expected bandwidth to the average data stream bandwidth. This calculation method can make the actual bandwidth be closer to the value of the expected bandwidth.

According to a third aspect, this application provides a cloud computing system. The cloud computing system includes: a service end, configured to establish a data transmission connection to a client, where the data transmission connection is used by the client to send a data stream to the service end; a cloud management platform, configured to provide an expected bandwidth creation interface, where the expected bandwidth creation interface is configured to receive an expected bandwidth that is entered by a tenant for the data transmission connection; and the client, configured to: when the expected bandwidth is less than an actual bandwidth for data stream transmission between the client and the service end, add a data stream to be sent to the service end; or when the expected bandwidth is greater than the actual bandwidth for data stream transmission between the client and the service end, remove a data stream for sending data to the service end.

According to a fourth aspect, this application provides a cloud management platform, where the cloud management platform is configured to manage an infrastructure that provides a cloud computing service, the infrastructure includes at least one service end, and the cloud management platform includes an expected bandwidth creation interface providing module, a transmission policy creation interface providing module, and a data transmission connection establishment module. The expected bandwidth creation interface providing module is configured to receive an expected bandwidth entered by a tenant, where the expected bandwidth is used to: when the expected bandwidth is less than an actual bandwidth for data stream transmission between a client and the service end, instruct the client to add a data stream to be sent to the service end; or when the expected bandwidth is greater than the actual bandwidth for data stream transmission between the client and the service end, instruct the client to remove a data stream to be sent to the service end.

Any one of the fourth aspect or the implementations of the fourth aspect is step implementation of an apparatus corresponding to any one of the second aspect or the implementations of the second aspect. Descriptions in any one of the second aspect or the implementations of the second aspect are applicable to any one of the fourth aspect or the implementations of the fourth aspect. Details are not described herein again.

According to a fifth aspect, this application provides a computing device cluster, including at least one computing device, where each computing device includes a processor and a memory. The processor of the at least one computing device is configured to execute instructions stored in the memory of the at least one computing device, so that the computing device cluster performs the method disclosed in any one of the first aspect or the possible implementations of the first aspect.

According to a sixth aspect, this application provides a computing device cluster, including at least one computing device, where each computing device includes a processor and a memory. The processor of the at least one computing device is configured to execute instructions stored in the memory of the at least one computing device, so that the computing device cluster performs the method disclosed in any one of the second aspect or the possible implementations of the second aspect.

According to a seventh aspect, this application provides a computer program product including instructions. When the instructions are run by a computer device cluster, the computer device cluster is enabled to implement the method disclosed in the first aspect or any possible implementation of the first aspect.

According to an eighth aspect, this application provides a computer program product including instructions. When the instructions are run by a computer device cluster, the computer device cluster is enabled to implement the method disclosed in the second aspect or any possible implementation of the second aspect.

According to a ninth aspect, this application provides a computer-readable storage medium, including computer program instructions. When the computer program instructions are executed by a computing device cluster, the computing device cluster is enabled to perform the method disclosed in the first aspect or any possible implementation of the first aspect.

According to a tenth aspect, this application provides a computer-readable storage medium, including computer program instructions. When the computer program instructions are executed by a computing device cluster, the computing device cluster is enabled to perform the method disclosed in the second aspect or any possible implementation of the second aspect.

### BRIEF DESCRIPTION OF DRAWINGS

FIG. 1 is a diagram of a system architecture of a cloud technology-based data transmission method according to an embodiment of the present invention;
FIG. 2 is a diagram of another system architecture of a cloud technology-based data transmission method according to an embodiment of the present invention;
FIG. 3 is a flowchart of a cloud technology-based data transmission method according to an embodiment of the present invention;
FIG. 4 is a diagram of a configuration interface of a cloud technology-based data transmission method according to an embodiment of the present invention;
FIG. 5 is a diagram of a cloud technology-based data transmission process according to an embodiment of the present invention;
FIG. 6 is a diagram of a data record block in a cloud technology-based data transmission process according to an embodiment of the present invention;
FIG. 7 is another diagram of a cloud technology-based data transmission process according to an embodiment of the present invention;
FIG. 8 is a diagram of an internal structure of a cloud management platform according to an embodiment of the present invention;
FIG. 9 is a diagram of a structure of a computing device in a cloud technology-based data transmission method according to an embodiment of the present invention; and
FIG. 10 is a diagram of a structure of a computing device cluster in a cloud technology-based data transmission method according to an embodiment of the present invention.

### DESCRIPTION OF EMBODIMENTS

The following describes the technical solutions in embodiments of the present invention with reference to the accompanying drawings in embodiments of the present invention. It is clear that the described embodiments are merely a part rather than all of embodiments of the present invention. All other embodiments obtained by persons of ordinary skill in the art based on embodiments of the present invention without creative efforts shall fall within the protection scope of the present invention.

For ease of understanding of embodiments of this application, some terms in the present invention are first explained and described.

Cloud management platform: The cloud management platform is configured to manage a plurality of cloud data centers that are disposed by a cloud vendor in different regions. The cloud management platform may provide an interface related to a cloud service, for example, a page or an application programming interface (Application Program Interface, API) for a tenant to remotely access a public cloud service. The tenant may log in to the cloud management platform on a public cloud access page by using a pre-registered account and password, and after the login is successful, the tenant may select and purchase, on the access page, a cloud service, for example, an object storage service, a virtual machine service, or a container service, provided by a cloud data center in a region selected by the tenant. Client: The client (client) is also referred to as a user end, and is a program that corresponds to a server and provides a local service for a customer. In addition to some applications that run only locally, the program is usually installed on a common client, and needs to work with a service end. A type of client includes DNS client, web client, game client, mobile client, and the like.

Service end: The service end serves a client, and service content includes providing a resource for the client, storing client data, and the like. The service end is a targeted service program, and the so-called targeted service program is a program specially set for a specific client.

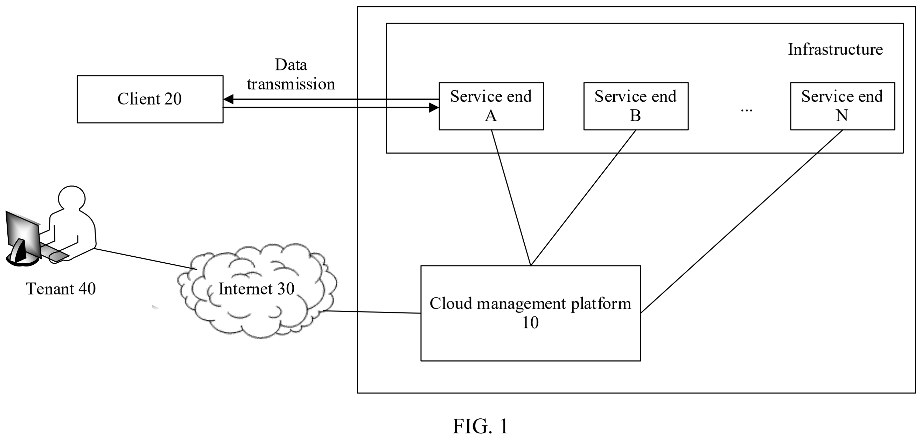

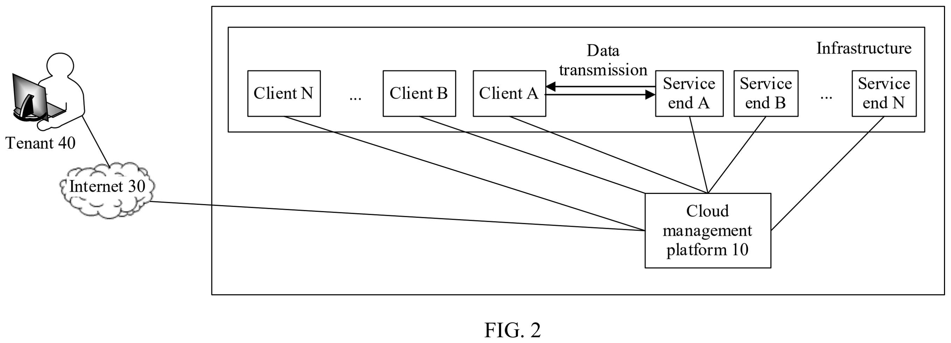

Refer to FIG. 1. FIG. 1 is a diagram of a system architecture of a cloud technology-based data transmission method according to an embodiment of the present invention. In the embodiment shown in FIG. 1, a cloud computing system includes a cloud management platform 10, a client 20, and a service end A. The cloud management platform 10 is configured to manage an infrastructure, and the infrastructure includes at least one service end: the service end A, a service end B, ..., and a service end N. The service end A establishes a data transmission connection to the client 20, and a tenant 40 logs in to the cloud management platform 10 through the Internet 30 and enters an expected bandwidth for a data transmission connection. When the expected bandwidth is less than an actual bandwidth for data stream transmission between the client 20 and the service end A, the client 20 adds a data stream to be sent to the service end A. Alternatively, when the expected bandwidth is greater than the actual bandwidth for data stream transmission between the client 20 and the service end A, the client 20 removes a data stream to be sent to the service end A. Refer to FIG. 2. FIG. 2 is a diagram of another system architecture of a cloud technology-based data transmission method according to an embodiment of the present invention. In the embodiment shown in FIG. 2, a cloud computing system includes a cloud management platform 10, a client A, and a service end A. The cloud management platform 10 is configured to manage an infrastructure, and the infrastructure includes at least one service end and at least one client: the service end A, a service end B, ..., and a service end N, and the client A, a client B, ..., and a client N. The service end A establishes a data transmission connection to the client A, and a tenant 40 logs in to the cloud management platform 10 through the Internet 30 and enters an expected bandwidth for a data transmission connection. When the expected bandwidth is less than an actual bandwidth for data stream transmission between the client A and the service end A, the client A adds a data stream to be sent to the service end A. Alternatively, when the expected bandwidth is greater than the actual bandwidth for data stream transmission between the client A and the service end A, the client A removes a data stream to be sent to the service end A.

It should be noted that, a difference between the architecture of the cloud computing system in the embodiment shown in FIG. 2 and the architecture of the cloud computing system in the embodiment shown in FIG. 1 lies in that the client 20 in FIG. 1 is located under a cloud data center, for example, located in a computer equipment room under a cloud data center of the tenant, and the client A in FIG. 2 is located on a cloud data center, for example, the service end A and the client A are respectively located in a virtual instance A and a virtual instance B that are created on a cloud of the tenant. The virtual instance A and the virtual instance B may be located in a same cloud data center in a same region, the virtual instance A and the virtual instance B may alternatively be located in different cloud data centers in a same region, or the virtual instance A and the virtual instance B may alternatively be located in different cloud data centers in different regions. The virtual instance A and the virtual instance B may be virtual machines, containers, bare metal servers, or the like.

Based on the cloud technology-based data transmission method implemented based on the foregoing system architecture, an embodiment of the present invention further discloses the cloud technology-based data transmission method. For details, refer to the following description.

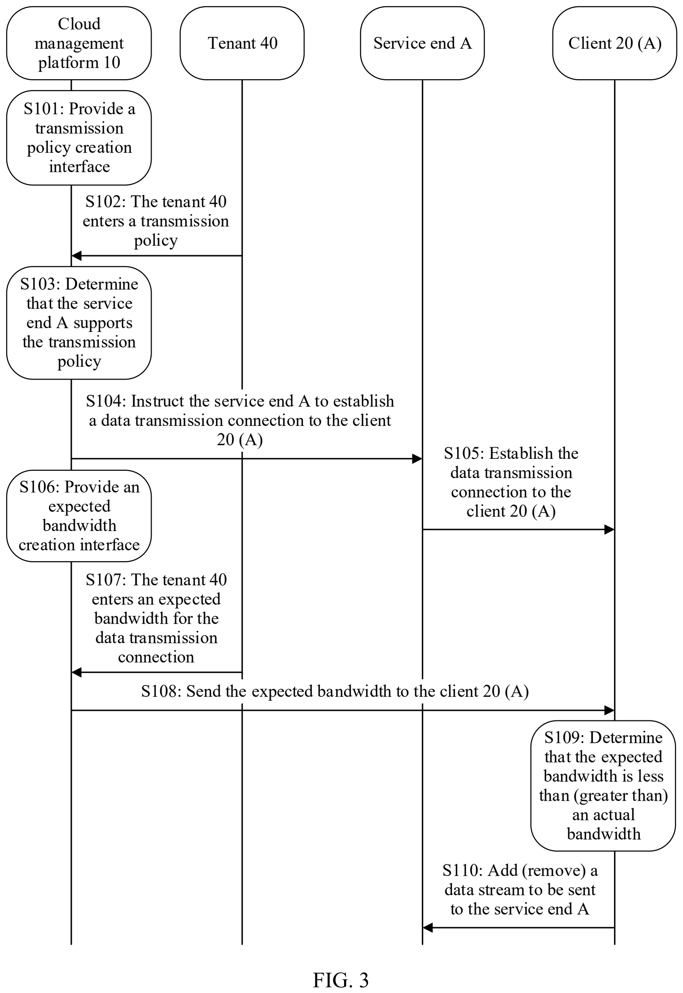

Refer to FIG. 3. FIG. 3 is a flowchart of a cloud technology-based data transmission method according to an embodiment of the present invention. The method includes the following steps.

S101: A cloud management platform provides a transmission policy creation interface.

The tenant 40 registers a dedicated account with the cloud management platform 10, and then may log in to the cloud management platform 10 by using a login account. The cloud management platform 10 provides a transmission policy creation interface. The transmission policy creation interface may be an interface or a command line, so that the tenant 40 logs in to the cloud management platform to perform a related operation.

S102: The tenant 40 enters a transmission policy.

The tenant 40 enters the transmission policy through the transmission policy creation interface provided by the cloud management platform 10. The transmission policy indicates data stream transmission protocol content to be sent between the client 20 (A) and the service end A.

S103: The cloud management platform 10 determines that the service end A supports the transmission policy.

The cloud management platform 10 determines whether the service end A supports the transmission policy entered by the tenant 40.

S104: The cloud management platform 10 instructs the service end A to establish a data transmission connection to the client 20 (A).

When determining that the service end A supports the transmission policy entered by the tenant 40, the cloud management platform 10 instructs the service end A to establish a data transmission connection to the client 20 (A). On the contrary, when determining that the service end A does not support the transmission policy entered by the tenant 40, the cloud management platform 10 does not instruct the service end A to establish a data transmission connection to the client 20 (A).

S105: The service end A establishes the data transmission connection to the client 20 (A).

After receiving an instruction sent by the cloud management platform 10, the service end A establishes the data transmission connection to the client 20 (A). The data transmission connection is used by the client 20 (A) to send a data stream to the service end A.

S106: The cloud management platform provides an expected bandwidth creation interface.

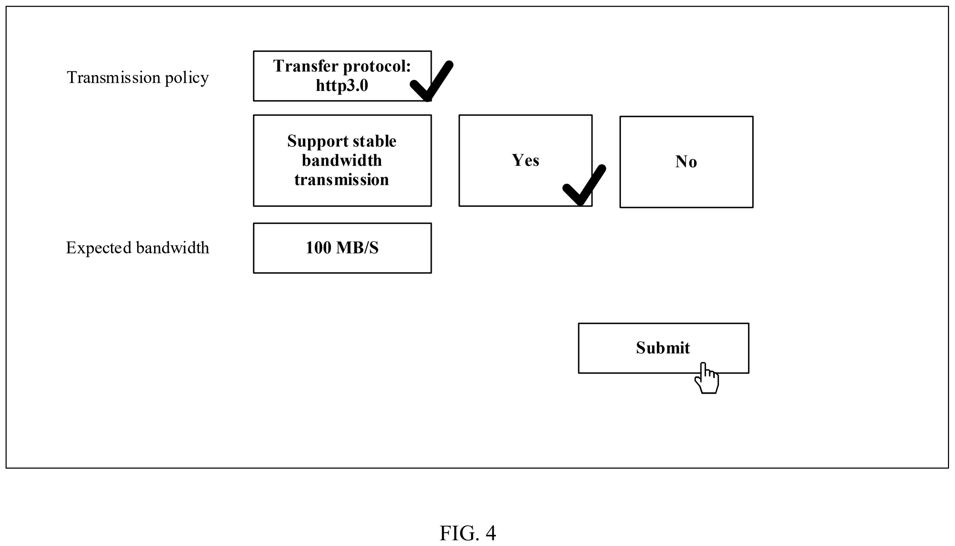

Similar to the description in step S101, the expected bandwidth creation interface may be an interface or a command line. The interface is used as an example. Refer to FIG. 4. FIG. 4 is a diagram of a configuration interface of a cloud technology-based data transmission method according to an embodiment of the present invention. In the embodiment shown in FIG. 4, the tenant 40 may enter or select a transmission policy in an interface. The transmission policy indicates data stream transmission protocol content to be sent by the client 20 (A) to the service end A. The data stream transmission protocol content may be, for example, that data stream transmission supports a transfer protocol http3.0, and the data stream transmission supports stable bandwidth transmission, and the like. In addition, the tenant 40 may further enter or select an expected bandwidth in the interface, and the expected bandwidth may be, for example, 100 MB/S.

S107: The tenant 40 enters an expected bandwidth for the data transmission connection.

The tenant 40 enters the expected bandwidth through the expected bandwidth creation interface provided by the cloud management platform 10. The expected bandwidth is used to describe a bandwidth at which the tenant 40 expects the client 20 (A) to send a data stream to the service end A.

S108: The cloud management platform 10 sends the expected bandwidth to the client 20 (A).

The cloud management platform 10 sends the expected bandwidth entered by the tenant 40 to the client 20 (A).

It should be noted that the expected bandwidth may be entered by the tenant 40 through the cloud management platform 10 and then sent to the client 20 (A), or may be calculated by the client 20 (A) by using an application on the client 20 (A).

S109: The client 20 (A) determines that the expected bandwidth is less than (greater than) an actual bandwidth.

The client 20 (A) monitors the actual bandwidth for data stream transmission with the service end A, and compares a size of the actual bandwidth with a size of the expected bandwidth.

S110: The client 20 (A) adds (removes) a data stream to be sent to the service end A.

When the expected bandwidth is less than the actual bandwidth for data stream transmission between the client 20 (A) and the service end A, the client 20 (A) adds a data stream to be sent to the service end A. Specifically, the client 20 (A) increases a quantity of data streams to be sent to the service end A in parallel, and a quantity of to-be-sent data streams is obtained by rounding up a ratio of the expected bandwidth to an average data stream bandwidth. For example, when the client 20 (A) monitors the actual bandwidth for data stream transmission with the service end A being 80 MB/S, the quantity of data streams transmitted in parallel on the actual bandwidth is 10, that is, the average data stream bandwidth is 80/10=8 MB/S. If the expected bandwidth entered by the tenant 40 is 100 MB/S, a quantity of data streams that need to be transmitted in parallel to reach the expected bandwidth is 100/8=12.5, and is 13 after being rounded up. In this case, a quantity of to-be-added data steams to be sent by the client 20 (A) to the service end A is 3. However, because an actual bandwidth for transmitting the 13 parallel data streams is 13x8=104 MB/S, which exceeds the expected bandwidth of 100 MB/S, to improve overall bandwidth utilization of a cloud data center, the actual bandwidth for data stream transmission between the client 20 (A) and the service end A further needs to be limited for a second time, so that the actual bandwidth is limited not to exceed the expected bandwidth. In other words, after the limitation for a second time, the actual bandwidth for transmitting the 13 parallel data streams cannot reach 104 MB/S, and the actual bandwidth still remains at a transmission rate of 100 MB/S.

Similarly, when the expected bandwidth is greater than the actual bandwidth for data stream transmission between the client 20 (A) and the service end A, the client 20 (A) removes a data stream to be sent to the service end A. Specifically, the client 20 (A) decreases a quantity of data streams to be sent to the service end A in parallel, and a quantity of data streams is obtained by rounding up a ratio of the expected bandwidth to an average data stream bandwidth. For a specific calculating method for decreasing the quantity of data streams to be sent in parallel, refer to the method for increasing the quantity of data streams to be sent in parallel in the previous paragraph. Details are not described herein again.

It should be noted that the cloud technology-based data transmission method provided in this embodiment of the present invention is applicable to two scenarios: computing migration and data migration. In the computing migration scenario, for example, scenario 1: A tenant deploys the client A and the service end A in a region A. As tenant services continuously increase, the tenant needs to deploy the client B and the service end B in a region B. Because the client A and the service end A are in the same region A, the client A can access data on the service end A nearby. However, when the client B wants to access data on the service end A, a scenario of cross-region data access occurs. Because different regions are located at different geographical locations, a bandwidth is unstable during cross-region data access. For example, in scenario 2, a client 20 of the tenant is located on a high-speed vehicle or train. When the client 20 accesses data on the service end A, because a distance between the client 20 and the service end A changes rapidly in real time, a bandwidth is unstable during data access.

In the data migration scenario, for example, in an active migration scenario, to reduce service running costs, some data that is infrequently accessed or has a low access latency requirement is migrated to a region with lower costs. For another example, in a passive migration scenario, the cloud management platform migrates, based on a data access habit and a data access frequency of the tenant, some data that is accessed infrequently or has a low access latency requirement to a region with lower costs, to help the tenant reduce service running costs. However, when a service of the tenant changes, and the data that is infrequently accessed needs to be accessed or previous data that has a low access latency requirement needs to be accessed, a case in which a bandwidth is unstable during data access also occurs.

Based on the foregoing four cases in which a bandwidth is unstable during data access, according to the cloud technology-based data transmission method provided in this embodiment of the present invention, a size of an actual bandwidth of a data stream to be sent to the service end is monitored, and a quantity of to-be-sent data streams is dynamically adjusted, so that the actual bandwidth meets an expected bandwidth requirement, and data transmission between the client and service end is more stable.

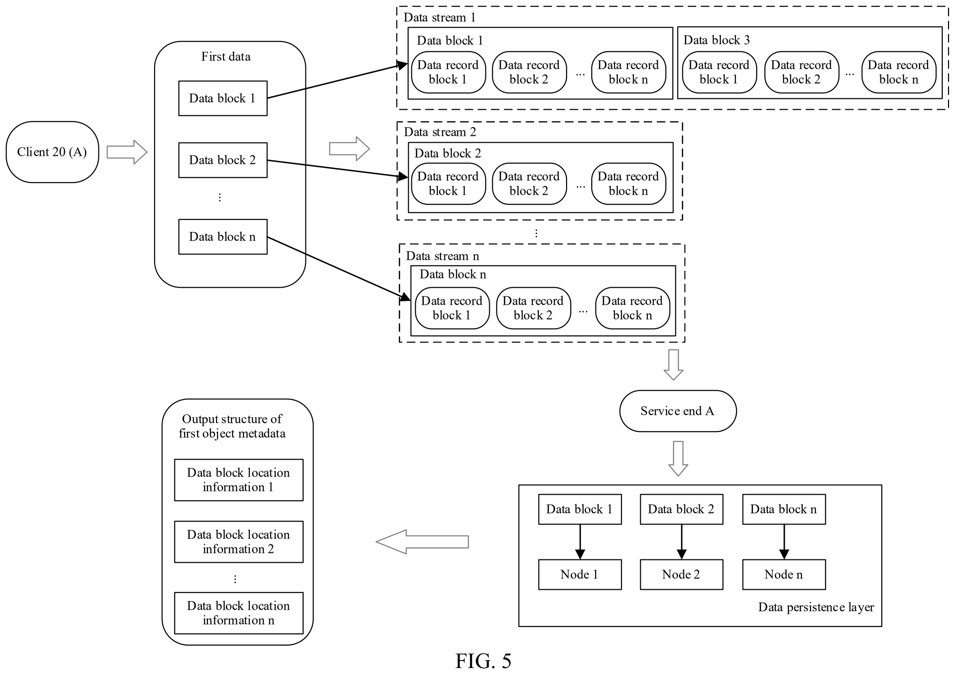

According to the foregoing cloud technology-based data transmission method, an embodiment of the present invention further discloses a cloud technology-based data transmission process. For details, refer to the following. Refer to FIG. 5. FIG. 5 is a diagram of a cloud technology-based data transmission process according to an embodiment of the present invention. A process in which the client 20 (A) sends a data stream to the service end A is as follows.

Step 11: The client 20 (A) splits first data based on a size of a data block to obtain a plurality of first data blocks. The plurality of first data blocks include a data block 1, a data block 2, ..., and a data block n.

Step 12: The client 20 (A) fills the data block 1, the data block 2, ..., and the data block n into a plurality of first data streams, and sends the plurality of first data streams to the service end A.

The plurality of first data streams include a data stream 1, a data stream 2, ..., and a data stream n. It should be noted that the plurality of data blocks herein may be randomly filled into the plurality of first data streams, or may be sequentially filled into the plurality of first data streams. How the data blocks are filled into the plurality of first data streams is not limited herein.

Step 13: The service end A receives the data stream 1, the data stream 2, ..., and the data stream n, and parses the data stream 1, the data stream 2, ..., and the data stream n to obtain the data block 1, the data block 2, ..., and the data block n.

Specifically, the service end A extracts data transmission identities carried in the data stream 1, the data stream 2, ..., and the data stream n, and parses the data stream 1, the data stream 2, ..., and the data stream n that carry a same data transmission identity to obtain the location information of the plurality of data record blocks, and the service end A assembles the data block 1, the data block 2, ..., and the data block n based on the location information of the plurality of data record blocks.

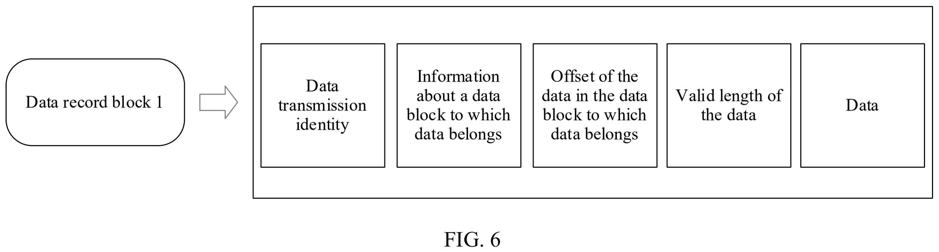

The plurality of data record blocks include a data record block 1, a data record block 2, ..., and a data record block n. Refer to FIG. 6. FIG. 6 is a diagram of a data record block in a cloud technology-based data transmission process according to an embodiment of the present invention. A data record block 1 is used as an example. Each data record block includes the following content: data transmission identity, information about a data block to which data belongs, an offset of data in the data block to which the data belongs, a valid length of data, and data. The data transmission identity may be, for example, a string of digital codes. Because data streams sent by the client 20 (A) to the service end A in parallel may belong to different data stream tasks, the service end A needs to collect data streams that carry a same digital code for parsing, to avoid mutual interference between different data stream tasks. In addition, in a transmission process in which the client 20 (A) sends data streams to the service end A in parallel, an arrival order of data blocks in each data stream at the service end A is also inconsistent. Therefore, a data block to be sent by the client 20 (A) to the service end needs to be assembled by using data block information to which data belongs and that is recorded in a data record block in the data stream.

Step 14: The service end A writes the data block 1, the data block 2, ..., and the data block n into a data persistence layer.

Sizes of the data block 1, the data block 2, ..., and the data block n are the same as a size of a node at the data persistence layer. Specifically, the data block 1, the data block 2, ..., and the data block n are respectively written into a node 1, a node 2, ..., and a node n at the data persistence layer.

Step 15: The service end A records location information of the plurality of first data blocks into an output structure of first object metadata.

The location information of the plurality of first data blocks includes data block location information 1, data block location information 2, ..., and data block location information n.

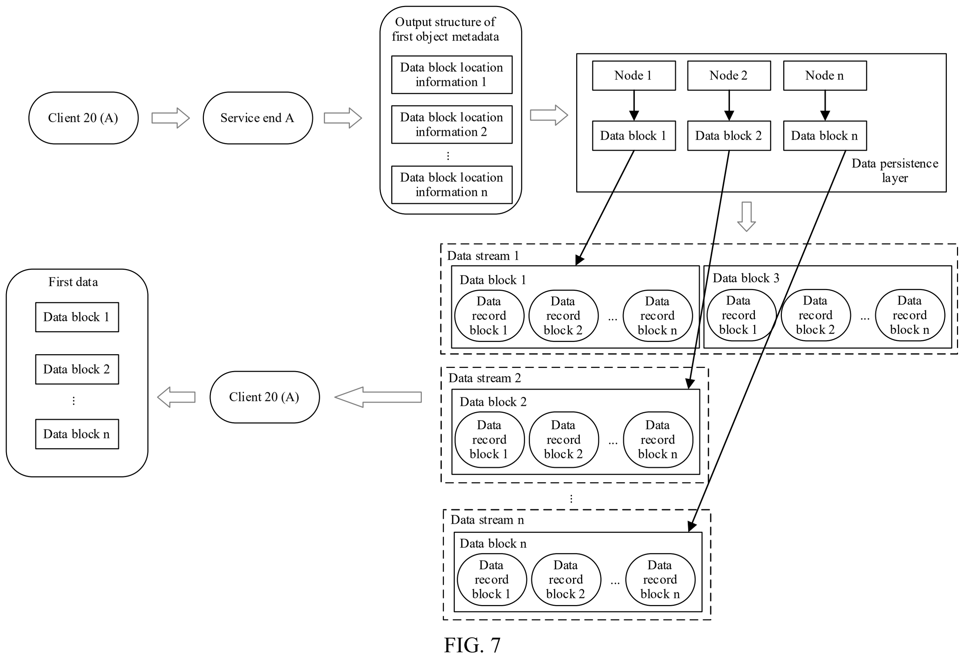

Refer to FIG. 7. FIG. 7 is another diagram of a cloud technology-based data transmission process according to an embodiment of the present invention. Similarly, because data transmission between the client 20 (A) and the service end A is mutual, a process in which the service end A sends a data stream to the client 20 (A) is as follows.

Step 21: The client 20 (A) sends a data read request to the service end A.

In step 11 to step 15, the service end A stores, on a cloud data center, data sent by the client 20 (A). When the client 20 (A) needs to read the data again, the client 20 (A) sends the data read request to the service end A.

Step 22: The service end A receives the data read request sent by the client 20 (A), determines a read range of the data read request, finds object metadata of to-be-read data, and obtains an output structure of the object metadata through parsing.

Specifically, an output structure of object metadata that is in the service end and that needs to be read needs to be found, to determine the read range of the data read request. For example, if data that needs to be read by the client 20 (A) is the first data sent to the service end A in step 11 to step 15, the service end finds an output structure of object metadata to which the first data belongs.

Step 23: The service end A reads the plurality of first data blocks from the data persistence layer.

The plurality of first data blocks include a data block 1, a data block 2, ..., and a data block n. Step 23 is reverse to step 14. Because the data block 1, the data block 2, ..., and the data block n have been written into the data persistence layer in step 14, the data block 1, the data block 2, ..., and the data block n need to be read from the data persistence layer in step 23. Specifically, the data block 1, the data block 2, ..., and the data block n are respectively read from the node 1, the node 2, ..., and the node n at the data persistence layer.

Step 24: The service end A fills the data block 1, the data block 2, ..., and the data block n into the plurality of first data streams, and sends the plurality of first data streams to the client 20 (A).

The plurality of first data streams include a data stream 1, a data stream 2, ..., and a data stream n. A filling process of the plurality of first data blocks in step 24 is similar to that in step 12. Details are not described herein again.

Step 25: The client 20 (A) receives the data stream 1, the data stream 2, ..., and the data stream n, and parses the data stream 1, the data stream 2, ..., and the data stream n to obtain the data block 1, the data block 2, ..., and the data block n.

A process of obtaining the plurality of first data blocks through parsing in step 25 is similar to that in step 13. Details are not described herein again.

According to the foregoing cloud technology-based data transmission process, an embodiment of the present invention further discloses an internal structure of a cloud management platform. For details, refer to the following.

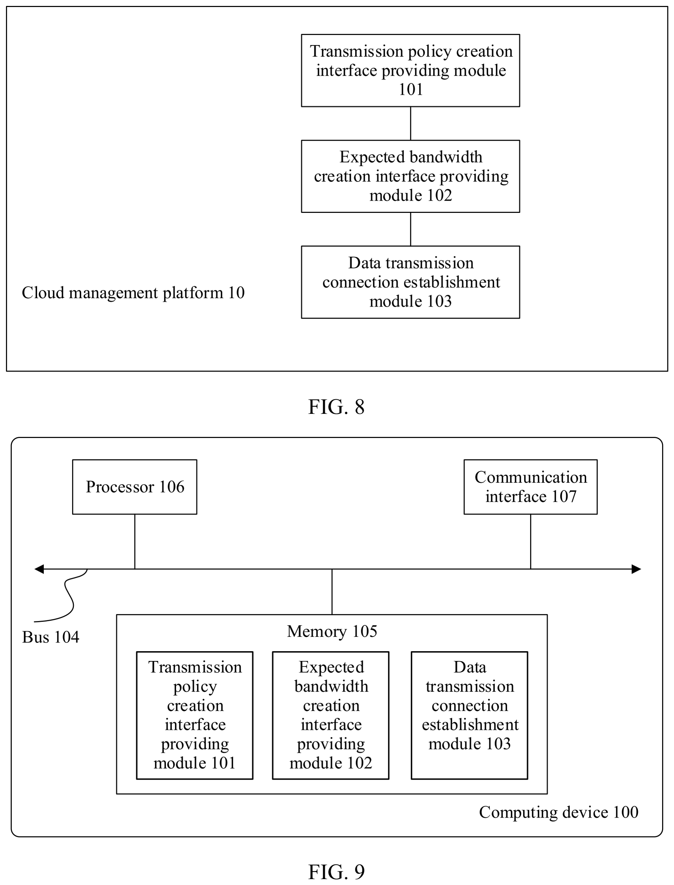

Refer to FIG. 8. FIG. 8 is a diagram of an internal structure of a cloud management platform according to an embodiment of the present invention. The cloud management platform is configured to manage an infrastructure that provides a cloud computing service. The infrastructure includes at least one service end. The cloud management platform includes a transmission policy creation interface providing module 101 and an expected bandwidth creation interface providing module 102.

The transmission policy creation interface providing module 101 is configured to receive a transmission policy entered by a tenant, where the transmission policy indicates data stream transmission protocol content to be sent by a client to a service end.

The expected bandwidth creation interface providing module 102 is configured to receive an expected bandwidth entered by the tenant, where the expected bandwidth is used to: when the expected bandwidth is less than an actual bandwidth for data stream transmission between the client and the service end, instruct the client to add a data stream to be sent to the service end; or when the expected bandwidth is greater than the actual bandwidth for data stream transmission between the client and the service end, instruct the client to remove a data stream to be sent to the service end.

A data transmission connection establishment module 103 is configured to: when it is determined that the service end supports the transmission policy, instruct the service end to establish a data transmission connection to the client, where the data transmission connection is used by the client to send a data stream to the service end.

It should be noted that the transmission policy creation interface providing module 101, the expected bandwidth creation interface providing module 102, and the data transmission connection establishment module 103 may all be implemented by using software, or may be implemented by using hardware. For example, the following uses the transmission policy creation interface providing module 101 as an example to describe an implementation of the transmission policy creation interface providing module 101. Similarly, for implementations of the expected bandwidth creation interface providing module 102 and the data transmission connection establishment module 103, refer to the implementation of the transmission policy creation interface providing module 101.

During implementation by using software, the transmission policy creation interface providing module 101 may be an application or a code block running on a computer device. The computer device may be at least one of computing devices such as a physical host, a virtual machine, and a container. Further, there may be one or more computer devices. For example, the transmission policy creation interface providing module 101 may be an application running on a plurality of hosts/virtual machines/containers. It should be noted that the plurality of hosts/virtual machines/containers configured to run the application may be distributed in a same availability zone (availability zone, AZ), or may be distributed in different AZs. The plurality of hosts/virtual machines/containers configured to run the application may be distributed in a same region (region) or may be distributed in different regions. Generally, one region may include a plurality of AZs.

Similarly, the plurality of hosts/virtual machines/containers configured to run the application may be distributed in a same virtual private cloud (virtual private cloud, VPC), or may be distributed in a plurality of VPCs. Generally, one region may include a plurality of VPCs, and one VPC may include a plurality of AZs.

During implementation by using hardware, the transmission policy creation interface providing module 101 may include at least one computing device, for example, a server. Alternatively, the transmission policy creation interface providing module 101 may be implemented by using an application-specific integrated circuit (application-specific integrated circuit, ASIC), a device implemented by using a programmable logic device (programmable logic device, PLD), or the like. The PLD may be implemented by using a complex programmable logic device (complex programmable logic device, CPLD), a field-programmable gate array (field-programmable gate array, FPGA), a generic array logic (generic array logic, GAL), or any combination thereof.

The plurality of computing devices included in the transmission policy creation interface providing module 101 may be distributed in a same AZ, or may be distributed in different AZs. The plurality of computing devices included in the transmission policy creation interface providing module 101 may be distributed in a same region, or may be distributed in different regions. Similarly, the plurality of computing devices included in the transmission policy creation interface providing module 101 may be distributed in a same VPC, or may be distributed in a plurality of VPCs. The plurality of computing devices may be any combination of computing devices such as a server, an ASIC, a PLD, a CPLD, an FPGA, and a GAL.

It should be noted that any one of the transmission policy creation interface providing module 101, the expected bandwidth creation interface providing module 102, and the data transmission connection establishment module 103 may be configured to perform some or all of the steps in the method for configuring a public cloud-based cloud connection service.

The modules of the cloud management platform 10 disclosed in embodiments of the present invention have clear division of labor and close cooperation, and the modules cooperate with each other to efficiently complete a service of performance optimization for a cloud service.

The present invention further provides a computing device. Refer to FIG. 9. FIG. 9 is a diagram of a structure of a computing device in a cloud technology-based data transmission method according to an embodiment of the present invention. The computing device 100 includes a bus 104, a processor 106, a memory 105, and a communication interface 107. The processor 106, the memory 105, and the communication interface 107 communicate with each other through the bus 104. The computing device 100 may be a server or a terminal device. It should be understood that quantities of processors and memories in the computing device 100 are not limited in this application.

The bus 104 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one line is used to represent the bus in FIG. 5, but this does not mean that there is only one bus or only one type of bus. The bus 104 may include a path for transferring information between components (for example, the memory 105, the processor 106, and the communication interface 107) of the computing device 100.

The processor 106 may include any one or more of a central processing unit (central processing unit, CPU), a graphics processing unit (graphics processing unit, GPU), a microprocessor (microprocessor, MP), a digital signal processor (digital signal processor, DSP), or other processors.

The memory 105 may include a volatile memory (volatile memory), for example, a random access memory (random access memory, RAM). The processor 106 may further include a non-volatile memory (non-volatile memory), for example, a read-only memory (read-only memory, ROM), a flash memory, a hard disk drive (hard disk drive, HDD), or a solid state drive (solid state drive, SSD).

The memory 105 stores executable program code, and the processor 106 executes the executable program code to separately implement functions of the transmission policy creation interface providing module 101, the expected bandwidth creation interface providing module 102, and the data transmission connection establishment module 103, so as to implement the method for configuring a public cloud-based cloud connection service. In other words, the memory 105 stores instructions used by a cloud management platform to perform the method for configuring a public cloud-based cloud connection service.

The communication interface 107 uses, for example but not limited to, a network interface card, or a transceiver module like a transceiver, to implement communication between the computing device 100 and another device or a communication network.

An embodiment of the present invention further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

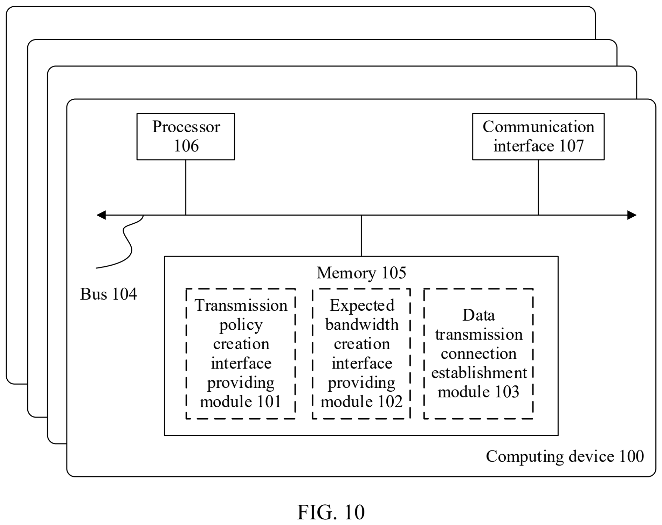

Refer to FIG. 10. FIG. 10 is a diagram of a structure of a computing device cluster in a cloud technology-based data transmission method according to an embodiment of the present invention. The computing device cluster includes at least one computing device 100. A memory 105 in one or more computing devices 100 in the computing device cluster may store same instructions used by a cloud management platform to perform the method for configuring a public cloud-based cloud connection service.

In some possible implementations, the one or more computing devices 100 in the computing device cluster may alternatively be configured to execute some instructions used by the cloud management platform to perform the method for configuring the public cloud-based cloud connection service. In other words, a combination of the one or more computing devices 100 may jointly execute the instructions used by the cloud management platform to perform the method for configuring the public cloud-based cloud connection service.

It should be noted that memories 105 in different computing devices 100 in the computing device cluster may store different instructions, which are used to perform some functions of the cloud management platform. In other words, instructions stored in the memories 105 in different computing devices 100 may implement functions of one or more of the transmission policy creation interface providing module 101, the expected bandwidth creation interface providing module 102, and the data transmission connection establishment module 103.

An embodiment of the present invention further provides a computer program product including instructions. The computer program product may be software or a program product that includes the instructions and that can be run on a computing device or stored in any usable medium. When the computer program product runs on at least one computer device, the at least one computer device is enabled to perform the foregoing method for configuring the public cloud-based cloud connection service that is applied to the cloud management platform.

An embodiment of the present invention further provides a computer-readable storage medium. The computer-readable storage medium may be any usable medium accessible by a computing device, or a data storage device, for example, a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions, and the instructions instruct a computing device to perform the foregoing method for configuring a public cloud-based cloud connection service that is applied to the cloud management platform.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of the present invention.

## Claims

1. A cloud technology-based data transmission method, wherein the method is applied to a cloud computing system, the cloud computing system comprises a client, a service end, and a cloud management platform, and the method comprises:
establishing, by the service end, a data transmission connection to the client, wherein the data transmission connection is used by the client to send a data stream to the service end;
providing, by the cloud management platform, an expected bandwidth creation interface, wherein the expected bandwidth creation interface is configured to receive an expected bandwidth that is entered by a tenant for the data transmission connection; and
when the expected bandwidth is less than an actual bandwidth for data stream transmission between the client and the service end, adding, by the client, a data stream to be sent to the service end; or
when the expected bandwidth is greater than the actual bandwidth for data stream transmission between the client and the service end, removing, by the client, a data stream to be sent to the service end.

2. The method according to claim 1, wherein the method further comprises:
providing, by the cloud management platform, a transmission policy creation interface, wherein the transmission policy creation interface is configured to receive a transmission policy entered by the tenant, and the transmission policy indicates data stream transmission protocol content to be sent by the client to the service end; and
instructing, by the cloud management platform when determining that the service end supports the transmission policy, the service end to establish the data transmission connection to the client.

3. The method according to claim 1 or 2, wherein adding, by the client, the data stream to be sent to the service end comprises:
increasing, by the client, a quantity of data streams to be sent in parallel to the service end.

4. The method according to claim 1 or 3, wherein removing, by the client, the data stream to be sent to the service end comprises:
decreasing, by the client, the quantity of data streams to be sent in parallel to the service end.

5. The method according to claim 1 or 4, wherein the method further comprises:
obtaining, by the client, an average data stream bandwidth for the data transmission connection; and
determining, by the client, the quantity of data streams, wherein the quantity of data streams is obtained by rounding up a ratio of the expected bandwidth to the average data stream bandwidth.

6. The method according to claim 1 or 5, wherein the method further comprises:
splitting, by the client, first data based on a size of a data block to obtain a plurality of first data blocks;
filling, by the client, the plurality of first data blocks into a plurality of first data streams, and sending the plurality of first data streams to the service end;
receiving, by the service end, the plurality of first data streams, and parsing the plurality of first data streams to obtain the plurality of first data blocks; and
writing, by the service end, the plurality of first data blocks into a data persistence layer.

7. The method according to claim 6, wherein parsing, by the service end, the plurality of first data streams to obtain the plurality of first data blocks comprises:
extracting, by the service end, data transmission identities carried in the plurality of first data streams;
parsing, by the service end, the plurality of first data streams that carry a same data transmission identity to obtain location information of a plurality of data record blocks; and
assembling, by the service end, the plurality of first data blocks based on the location information of the plurality of data record blocks.

8. The method according to claim 6 or 7, wherein the size of the data block is the same as a size of a node at the data persistence layer.

9. A cloud technology-based data transmission method, wherein the method is applied to a cloud management platform, the cloud management platform is configured to manage an infrastructure that provides a cloud computing service, the infrastructure comprises at least one service end, and the method comprises:
providing, by the cloud management platform, an expected bandwidth creation interface, wherein the expected bandwidth creation interface is configured to receive an expected bandwidth entered by a tenant, and the expected bandwidth is used to: when the expected bandwidth is less than an actual bandwidth for data stream transmission between a client and the service end, instruct the client to add a data stream to be sent to the service end; or
when the expected bandwidth is greater than the actual bandwidth for data stream transmission between the client and the service end, instruct the client to remove a data stream to be sent to the service end.

10. The method according to claim 9, wherein the method further comprises:
providing, by the cloud management platform, a transmission policy creation interface, wherein the transmission policy creation interface is configured to receive a transmission policy entered by the tenant, and the transmission policy indicates data stream transmission protocol content to be sent by the client to the service end; and
when determining that the service end supports the transmission policy, instructing, by the cloud management platform, the service end to establish a data transmission connection to the client, wherein the data transmission connection is used by the client to send a data stream to the service end.

11. The method according to claim 9 or 10, wherein adding, by the client, the data stream to be sent to the service end comprises:
increasing, by the client, a quantity of data streams to be sent in parallel to the service end.

12. The method according to claim 9 or 11, wherein removing, by the client, the data stream to be sent to the service end comprises:
decreasing, by the client, the quantity of data streams to be sent in parallel to the service end.

13. The method according to claim 9 or 12, wherein the quantity of data streams is obtained by rounding up a ratio of the expected bandwidth to an average data stream bandwidth for the data transmission connection.

14. A cloud computing system, wherein the cloud computing system comprises:
a service end, configured to establish a data transmission connection to a client, wherein the data transmission connection is used by the client to send a data stream to the service end;
a cloud management platform, configured to provide an expected bandwidth creation interface, wherein the expected bandwidth creation interface is configured to receive an expected bandwidth that is entered by a tenant for the data transmission connection; and
the client, configured to: when the expected bandwidth is less than an actual bandwidth for data stream transmission between the client and the service end, add a data stream to be sent to the service end; or
when the expected bandwidth is greater than the actual bandwidth for data stream transmission between the client and the service end, remove a data stream for sending data to the service end.

15. A cloud management platform, wherein the cloud management platform is configured to manage an infrastructure that provides a cloud computing service, the infrastructure comprises at least one service end, and the cloud management platform comprises:
an expected bandwidth creation interface providing module, configured to receive an expected bandwidth entered by a tenant, wherein the expected bandwidth is used to: when the expected bandwidth is less than an actual bandwidth for data stream transmission between a client and the service end, instruct the client to add a data stream to be sent to the service end; or
when the expected bandwidth is greater than the actual bandwidth for data stream transmission between the client and the service end, instruct the client to remove a data stream to be sent to the service end.

16. The cloud management platform according to claim 15, further comprising:
a transmission policy creation interface providing module, wherein the transmission policy creation interface is configured to receive a transmission policy entered by the tenant, and the transmission policy indicates data transmission protocol content to be sent by the client to the service end; and
a data transmission connection establishment module, wherein the data transmission connection establishment module is configured to: when it is determined that the service end supports the transmission policy, instruct the service end to establish a data transmission connection to the client, wherein the data transmission connection is used by the client to send a data stream to the service end.

17. The cloud management platform according to claim 15 or 16, wherein that the client adds the data stream to be sent to the service end comprises:
the client increases a quantity of data streams to be sent in parallel to the service end.

18. The cloud management platform according to claim 15 or 17, wherein that the client removes the data stream to be sent to the service end comprises:
the client decreases the quantity of data streams to be sent in parallel to the service end.

19. The cloud management platform according to claim 15 or 18, wherein the quantity of data streams is obtained by rounding up a ratio of the expected bandwidth to an average data stream bandwidth for the data transmission connection.

20. A computing device cluster, comprising at least one computing device, wherein each computing device comprises a processor and a memory; and
the processor of the at least one computing device is configured to execute instructions stored in the memory of the at least one computing device, to enable the computing device cluster to perform the method according to any one of claims 1 to 8.

21. A computing device cluster, comprising at least one computing device, wherein each computing device comprises a processor and a memory; and
the processor of the at least one computing device is configured to execute instructions stored in the memory of the at least one computing device, to enable the computing device cluster to perform the method according to any one of claims 9 to 13.

22. A computer program product comprising instructions, wherein when the instructions are run by a computer device cluster, the computer device cluster is enabled to perform the method according to any one of claims 1 to 8.

23. A computer program product comprising instructions, wherein when the instructions are run by a computer device cluster, the computer device cluster is enabled to perform the method according to any one of claims 9 to 13.

24. A computer-readable storage medium, comprising computer program instructions, wherein when the computer program instructions are executed by a computing device cluster, the computing device cluster performs the method according to any one of claims 1 to 8.

25. A computer-readable storage medium, comprising computer program instructions, wherein when the computer program instructions are executed by a computing device cluster, the computing device cluster performs the method according to any one of claims 9 to 13.
